(19) **Europäisches Patentamt**
**European Patent Office**
**Office européen des brevets**

(11) **EP 3 635 229 B1**

(12) # FASCICULE DE BREVET EUROPEEN

(45) Date de publication et mention de la délivrance du brevet:
**07.12.2022 Bulletin 2022/49**

(21) Numéro de dépôt: **18782479.2**

(22) Date de dépôt: **25.07.2018**

(51) Classification Internationale des Brevets (IPC):
**F02C 7/045** *(2006.01)*  **G10K 11/172** *(2006.01)*

(52) Classification Coopérative des Brevets (CPC):
**F02C 7/045; B64D 33/02; G10K 11/172;**
B64D 2033/0206; F05D 2260/96; Y02T 50/60

(86) Numéro de dépôt international:
**PCT/FR2018/051899**

(87) Numéro de publication internationale:
**WO 2019/020933 (31.01.2019 Gazette 2019/05)**

(54) **PANNEAU ACOUSTIQUE ET ENSEMBLE PROPULSIF ASSOCIÉ**

AKUSTIKPLATTE UND ZUGEHÖRIGE ANTRIEBSEINHEIT

ACOUSTIC PANEL AND ASSOCIATED PROPULSION UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2017 FR 1757051**

(43) Date de publication de la demande:
**15.04.2020 Bulletin 2020/16**

(73) Titulaire: **Safran Aircraft Engines**
**75015 Paris (FR)**

(72) Inventeurs:
• **RIOU, Georges Jean Xavier**
**77550 Moissy-Cramayel (FR)**
• **JODET, Norman Bruno André**
**77550 Moissy-Cramayel (FR)**
• **GONZALEZ, Jéremy Paul Francisco**
**77550 Moissy-Cramayel (FR)**

(74) Mandataire: **Brevalex**
**95, rue d'Amsterdam**
**75378 Paris Cedex 8 (FR)**

(56) Documents cités:
**FR-A1- 2 376 994    US-A1- 2004 045 766**
**US-A1- 2010 206 664**

**Description**

## DOMAINE TECHNIQUE

La présente invention concerne un panneau acoustique pour ensemble propulsif d'aéronef, destiné à être agencé en bordure d'une veine d'écoulement de fluide de l'ensemble propulsif.

L'invention concerne également un ensemble propulsif comportant un tel panneau acoustique.

L'invention s'applique au domaine des ensembles propulsifs d'aéronefs, et plus particulièrement à des panneaux acoustiques agencés dans de tels ensembles propulsifs.

## ÉTAT DE LA TECHNIQUE ANTÉRIEURE

Il est connu de munir un ensemble propulsif de panneaux acoustiques afin d'atténuer le bruit généré par une turbomachine présente dans ledit ensemble propulsif. Un tel bruit est, par exemple, causé par l'interaction d'un rotor de la turbomachine avec son environnement.

En général, de tels panneaux acoustiques se composent d'un cœur présentant une structure en nid d'abeille prise entre une première plaque, destinée à être en contact avec un écoulement fluide dans l'ensemble propulsif, et une deuxième plaque, disposée à l'opposé de la première plaque par rapport à la structure en nid d'abeille. En général, la première plaque est munie d'une pluralité de cols, assimilables à des tubes, s'étendant dans des alvéoles du cœur perpendiculairement à la première plaque. En outre, la deuxième plaque est imperméable et rigide afin de réfléchir des ondes acoustiques. Dans ce cas, chaque alvéole dans laquelle s'étend au moins un col forme un résonateur de Helmholtz, qui est apte à assurer une atténuation acoustique par un effet de dissipation visco-thermique au niveau des orifices par lesquels les cols débouchent dans les alvéoles. Dans ce cas, chaque alvéole forme une cavité résonnante.

Dans un résonateur de Helmholtz, l'accord en fréquence, c'est-à-dire l'ajustement de la fréquence pour laquelle un maximum d'atténuation acoustique est obtenu, est piloté par le volume du (ou des) col(s) ainsi que par le volume de la cavité résonnante associée. De par la faible hauteur des cols, l'accord en fréquence du résonateur est principalement piloté par l'épaisseur de la structure en nid d'abeille.

Avec de tels panneaux acoustiques, une atténuation acoustique satisfaisante, à une fréquence donnée, est obtenue lorsque l'épaisseur des alvéoles est de l'ordre du quart de la longueur d'onde correspondant à ladite fréquence.

Néanmoins, de tels panneaux acoustiques ne donnent pas entière satisfaction.

En effet, les turbomachines de nouvelle génération présentent une vitesse de rotation nominale et un nombre d'aubes réduits par rapport aux turbomachines des générations précédentes. Ceci se traduit par le fait que les bruits générés par les turbomachines de nouvelle génération présentent des fréquences plus basses, c'est-à-dire des longueurs d'onde plus grandes, que les bruits générés par les turbomachines des générations précédentes.

Dans le cas des panneaux acoustiques de l'état de la technique, il est nécessaire d'accroître significativement l'épaisseur du panneau acoustique lorsque la fréquence des ondes acoustiques à atténuer diminue. Ceci entraîne une augmentation de l'encombrement et de la masse du panneau acoustique, ce qui n'est pas acceptable, notamment dans le cas d'applications aéroportées. Le document US2010/206664 divulgue un panneau acoustique pour ensemble propulsif d'aéronef de l'art antérieur.

Un but de l'invention est donc de proposer un panneau acoustique pour lequel l'encombrement et la masse dépendent moins de la fréquence des ondes acoustiques à atténuer que les panneaux acoustiques classiques.

## EXPOSÉ DE L'INVENTION

A cet effet, l'invention a pour objet un panneau acoustique du type précité, le panneau acoustique comportant un cœur et une couche d'entrée,

le cœur comprenant une pluralité d'alvéoles agencées pour former une structure en nid d'abeille, chaque alvéole débouchant, d'une part, sur une première face du cœur et, d'autre part, sur une deuxième face du cœur située à l'opposé de la première face, la couche d'entrée comprenant un élément inférieur et un élément supérieur, chacun de l'élément inférieur et de l'élément supérieur comportant une plaque respective comprenant une face interne et une face externe orientée à l'opposé de la face interne, chacun parmi l'élément inférieur et l'élément supérieur comprenant au moins une ouverture traversante débouchant, d'une part, sur la face externe et, d'autre part, sur la face interne, la face interne d'au moins un parmi l'élément inférieur et l'élément supérieur comprenant, pour au moins une ouverture traversante, un sillon correspondant dans lequel débouche l'ouverture traversante, la face interne de l'élément inférieur étant disposée en regard et au contact de la face interne de l'élément supérieur, chaque ouverture traversante de l'un parmi l'élément supérieur et l'élément inférieur étant en regard d'un sillon de l'autre parmi l'élément supérieur et l'élément inférieur, de manière à former un canal avec le sillon et l'ouverture traversante de l'autre parmi l'élément supérieur et l'élément inférieur qui débouche dans le sillon, les ouvertures traversantes de chaque canal étant décalées dans une direction distincte d'une direction d'épaisseur de la couche d'entrée,

la couche d'entrée s'étendant en regard et au contact de la première face du cœur,

pour chaque canal, l'ouverture traversante de l'élément inférieur débouchant dans une alvéole du cœur, et l'ouverture traversante de l'élément supérieur étant destinée à déboucher dans la veine d'écoulement de fluide.

En effet, dans un panneau acoustique selon l'invention, chaque canal qui débouche dans une alvéole de la structure en nid d'abeille est assimilable à un col d'un résonateur de Helmholtz. Puisque les sillons sont réalisés au niveau de la face interne de l'élément inférieur et/ou de l'élément supérieur, il en résulte que chaque canal du panneau acoustique selon l'invention s'étend principalement parallèlement à la couche d'entrée, contrairement aux panneaux acoustiques classiques dans lesquels le col de chaque résonateur de Helmholtz s'étend perpendiculairement à la couche d'entrée.

Ainsi, avec un panneau acoustique selon l'invention, il est aisé de réaliser un accord en fréquence pour atténuer les bruits générés par les turbomachines de nouvelle génération, et ce sans modifier l'épaisseur du panneau acoustique. En effet, l'adaptation en fréquence se fait simplement en modifiant, par exemple, les dimensions des sillons, et plus particulièrement la longueur des sillons, ce qui ne requiert pas un accroissement de l'épaisseur de la couche d'entrée. Une telle modification des dimensions des sillons se traduit par une modification du volume du canal, ce qui conduit bien à une modification de la fréquence d'atténuation du panneau acoustique.

Un panneau acoustique selon l'invention présente donc bien un encombrement et une masse qui dépendent moins de la fréquence des ondes acoustiques à atténuer que les panneaux acoustiques classiques.

Suivant d'autres aspects avantageux de l'invention, le panneau acoustique comporte une ou plusieurs des caractéristiques suivantes, prise(s) isolément ou suivant toutes les combinaisons techniquement possibles :

-    la face interne de chacun parmi l'élément inférieur et l'élément supérieur comprend, pour chaque ouverture traversante, un sillon correspondant dans lequel débouche l'ouverture traversante, chaque canal étant formé par deux sillons respectifs de l'élément inférieur et de l'élément supérieur en regard l'un de l'autre et par les ouvertures traversantes correspondantes de l'élément inférieur et de l'élément supérieur;

-    pour chaque sillon, l'ouverture traversante correspondante débouche, sur la face interne, dans une extrémité du sillon ;

-    pour chaque canal, les sillons correspondants sont intégralement en regard l'un de l'autre ;

-    le panneau acoustique comporte, en outre, une couche réfléchissante configurée pour réfléchir des ondes acoustiques présentant une fréquence appartenant à une plage prédéterminée, la couche réfléchissante s'étendant en regard et au contact de la deuxième face du cœur ;

-    pour chacun parmi l'élément supérieur et l'élément inférieur, la face interne correspondante comporte une pluralité de sillons, les sillons étant symétriques par rapport à un plan de symétrie, et, pour au moins une paire de sillons symétriques entre eux par rapport au plan de symétrie, les ouvertures traversantes correspondantes sont disposées de sorte à déboucher dans des extrémités desdits sillons qui ne sont pas symétriques l'une de l'autre par rapport au plan de symétrie ;

-    la face interne de l'un parmi l'élément inférieur et l'élément supérieur comporte au moins un plot engagé dans une cavité associée de l'autre parmi l'élément inférieur et l'élément supérieur, la cavité et le plot associé présentant des formes complémentaires ;

-    pour chacun parmi l'élément supérieur et l'élément inférieur, chaque sillon est rectiligne et s'étend le long d'un axe longitudinal parallèle à un plan localement tangent à la face interne correspondante, et, pour chaque sillon, l'ouverture traversante correspondante présente un axe orthogonal au plan localement tangent à la face interne ;

-    le sillon présente une profondeur inférieure ou égale à la moitié d'une longueur du sillon, de préférence inférieure ou égale au tiers de la longueur du sillon, la longueur du sillon étant définie par l'étendue du sillon le long de l'axe longitudinal.

En outre, l'invention a pour objet un ensemble propulsif pour aéronef comportant au moins un panneau acoustique tel que défini ci-dessus.

## BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :

-    la figure 1 est une vue en section d'un ensemble propulsif selon l'invention, dans un plan longitudinal de l'ensemble propulsif;

-    la figure 2 est une vue schématique en perspective d'un panneau acoustique selon l'invention ;

-    la figure 3 est une vue de dessus d'un premier mode de réalisation d'un panneau acoustique selon l'invention ;

-    la figure 4 est une vue de dessus d'un deuxième mode de réalisation d'un panneau acoustique selon l'invention ;

-    la figure 5 est une vue éclatée et en section d'une couche d'entrée du panneau acoustique de la figure 2, selon un plan orthogonal à une face externe de la couche d'entrée, et contenant un axe longitudinal de canaux de la couche d'entrée ;

- la figure 6 est une vue en section de la couche d'entrée du panneau acoustique de la figure 2, selon le plan de la figure 5 ;
- la figure 7 est une vue schématique en section, selon le plan de la figure 5, du panneau acoustique de la figure 2 ;
- la figure 8 est une vue éclatée et en section d'une couche d'entrée d'un troisième mode de réalisation d'un panneau acoustique selon l'invention, suivant un plan orthogonal à une face externe de la couche d'entrée, et contenant un axe longitudinal de canaux de la couche d'entrée ; et
- la figure 9 est une vue en section, non éclatée, de la couche d'entrée du panneau acoustique de la figure 8, selon le plan de la figure 8.

## EXPOSÉ DÉTAILLÉ DE MODES DE RÉALISATION PARTICULIERS

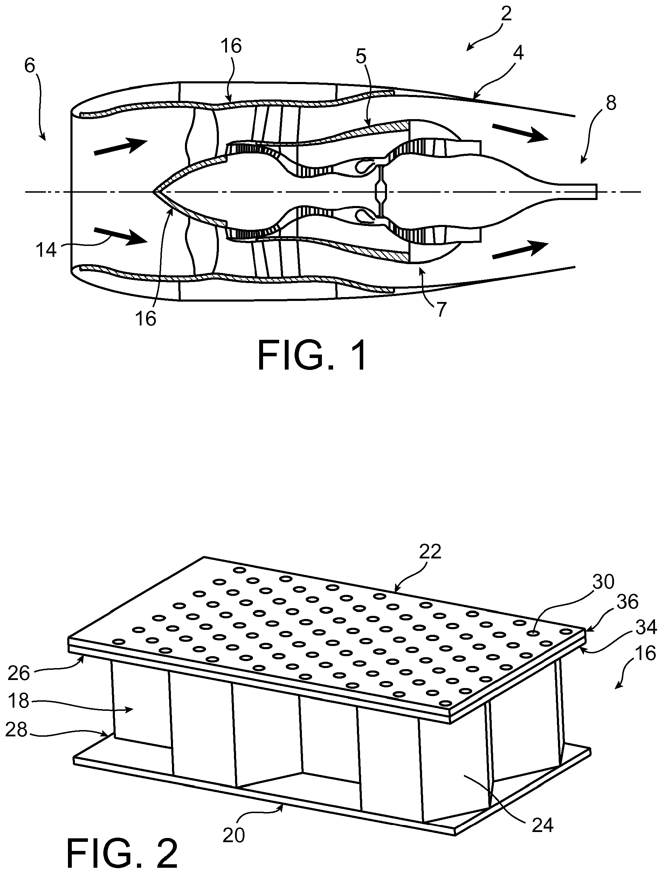

Un ensemble propulsif 2 selon l'invention est représenté sur la figure 1.

L'ensemble propulsif 2 comporte une nacelle 4 et une turbomachine, par exemple un turboréacteur 5.

La nacelle 4 entoure le turboréacteur 5 et délimite extérieurement une veine d'écoulement de fluide comprenant un canal d'entrée d'air 6, une veine secondaire 7 et un canal d'échappement 8.

Le turboréacteur 5 est destiné à générer, lors de son fonctionnement, une veine d'air 14 s'écoulant depuis le canal d'entrée 6 vers le canal d'échappement 8. La veine d'air 14 est illustrée par un ensemble de flèches sur la figure 1.

L'ensemble propulsif 2 comprend, en outre, au moins un panneau acoustique 16.

Chaque panneau acoustique 16 est configuré pour atténuer des ondes acoustiques dont la fréquence appartient à une plage de fréquences prédéterminée.

De préférence, chaque panneau acoustique 16 est intégré à la nacelle 4 et/ou au turboréacteur 5, par exemple pour délimiter au moins une section axiale de l'un au moins parmi le canal d'entrée d'air 6, la veine secondaire 7 et le canal d'échappement 8.

De préférence, un ensemble de panneaux acoustiques 16 en portion d'anneau sont montés bout à bout circonférentiellement.

En référence à la figure 2, le panneau acoustique 16 comporte un cœur 18, une couche réfléchissante 20 et une couche d'entrée 22.

Le cœur 18 présente une structure en nid d'abeille. Plus précisément, le cœur 18 comporte une pluralité d'alvéoles 24, agencées selon une structure en nid d'abeille connue.

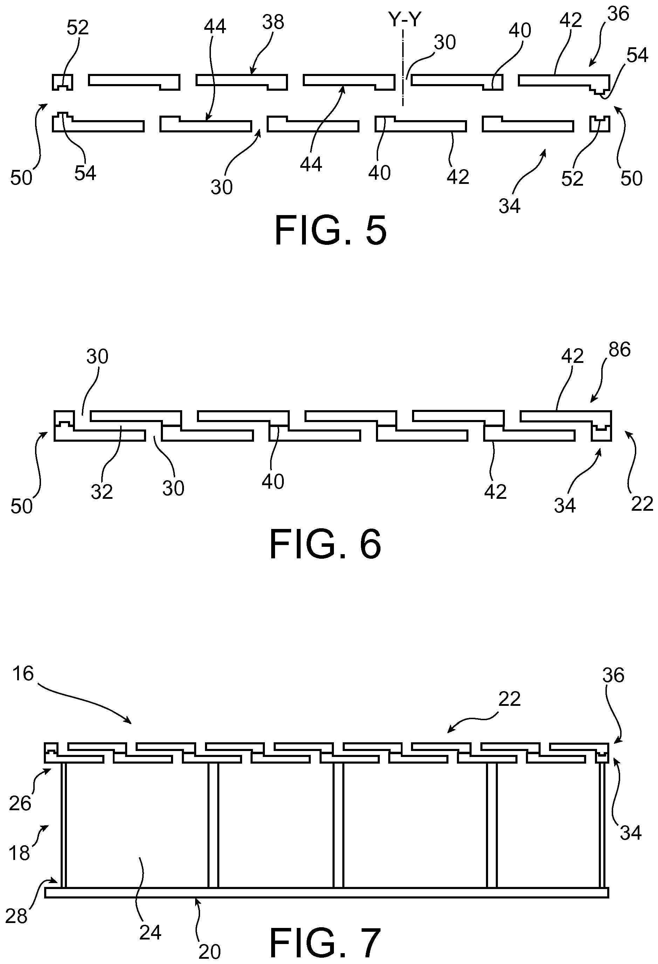

Comme cela apparaît sur la figure 7, chaque alvéole 24 débouche sur une première face 26 du cœur 18 et sur une deuxième face 28 du cœur 18 située à l'opposé de la première face 26.

La première face 26 du cœur 18 est celle, parmi la première face 26 et la deuxième face 28, qui est destinée à être orientée vers la veine d'air 14. La deuxième face 28 du cœur est celle, parmi la première face 26 et la deuxième face 28, qui est destinée à être orientée à l'opposé de la veine d'air 14.

De préférence, le cœur 18 est tel que la distance entre la première face 26 et la deuxième face 28 est de l'ordre du quart de la longueur d'onde correspondant à une fréquence de travail prédéterminée.

La fréquence de travail est une fréquence pour laquelle une atténuation acoustique maximale est souhaitée. La fréquence de travail appartient à la plage de fréquences prédéterminée.

Par exemple, le cœur 18 est réalisé en métal, par exemple en aluminium. Selon un autre exemple, le cœur 18 est réalisé dans un matériau composite, tel qu'un matériau composite formé de fibres de carbone noyées dans une matrice de résine durcie.

La couche réfléchissante 20 est adaptée pour réfléchir des ondes acoustiques présentant une fréquence appartenant à la plage de fréquences prédéterminée.

La couche réfléchissante 20 s'étend en regard de la deuxième face 28 du cœur 18, en étant au contact de la deuxième face 28. Plus précisément, la couche réfléchissante 20 est solidaire de la deuxième face 28 du cœur 18, par exemple collée à la deuxième face 28 du cœur 18.

Par exemple, la couche réfléchissante 20 est réalisée en métal, par exemple en aluminium. Selon un autre exemple, la couche réfléchissante 20 est réalisée dans un matériau composite, tel qu'un matériau composite formé de fibres de carbone noyées dans une matrice de résine durcie.

La couche d'entrée 22 s'étend en regard de la première face 26 du cœur 18, en étant au contact de la première face 26. Plus précisément, la couche d'entrée 22 est solidaire de la première face 26 du cœur 18, par exemple collée à la première face 26 du cœur 18.

La couche d'entrée 22 est agencée de sorte qu'une ouverture traversante 30 d'au moins un canal 32 de la couche d'entrée 22 débouche dans une alvéole 24 du cœur 18. L'ouverture traversante 30 et le canal 32 seront décrits ultérieurement.

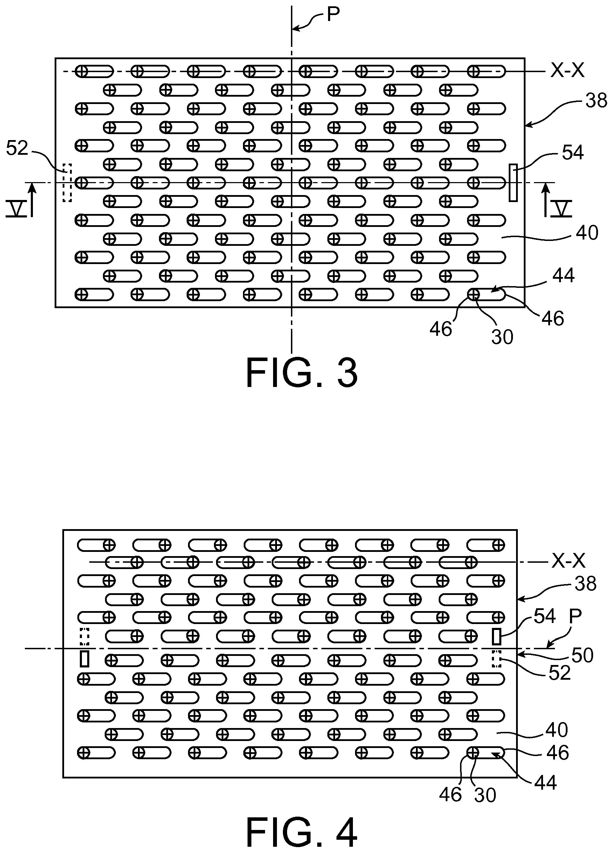

La couche d'entrée 22 va maintenant être décrite en référence aux figures 3 à 7.

La couche d'entrée 22 comporte un élément inférieur 34 et un élément supérieur 36.

Chacun de l'élément inférieur 34 et de l'élément supérieur 36 comporte une plaque 38 respective.

Par exemple, la plaque 38 présente une épaisseur comprise entre 0,5 mm (millimètre) et 2 mm.

La plaque 38 comprend une face interne 40 et une face externe 42 orientée à l'opposé de la face interne.

La plaque 38 est, par exemple, réalisée dans un matériau composite, tel qu'un matériau composite formé de fibres de carbone noyées dans une matrice de résine durcie.

Comme cela apparaît sur la figure 4, la face interne 40 de la plaque comprend au moins un sillon 44. Chaque sillon 44 présente deux extrémités 46 opposées.

De préférence, chaque sillon 44 est rectiligne et s'étend le long d'un axe longitudinal X-X respectif parallèle à un plan localement tangent à la face interne 40.

Les axes longitudinaux respectifs des sillons 44 sont ou non parallèles les uns aux autres.

De préférence, chaque sillon 44 présente une profondeur inférieure ou égale à la moitié de la longueur du sillon, de préférence inférieure ou égale au tiers de la longueur du sillon. La longueur du sillon 44 est définie comme l'étendue du sillon 44 le long de l'axe longitudinal X-X.

De préférence, les sillons 44 sont régulièrement disposés sur la face interne 40 de la plaque 38, comme cela apparaît sur les figures 4 et 5.

Chaque sillon 44 est associé à une ouverture traversante 30 correspondante.

Chaque ouverture traversante 30 débouche, d'une part, sur la face interne 40 dans une extrémité du sillon 44 correspondant et, d'autre part, sur la face externe de la plaque 38.

De préférence, pour chaque sillon 44, l'ouverture traversante 30 correspondante présente un axe Y-Y qui est orthogonal au plan localement tangent à la face interne 40.

Les sillons 44 et les ouvertures traversantes 30 sont, par exemple, obtenus par usinage ou par emboutissage de la plaque 38, ou encore lors de la réalisation de la plaque 38 par moulage.

Avantageusement, la face interne 40 de la plaque 38 présente un plan de symétrie P. Le plan de symétrie P est tel que les sillons 44 sont symétriques par rapport au plan de symétrie P.

En outre, pour au moins une paire de sillons 44 symétriques entre eux par rapport au plan de symétrie P, les ouvertures traversantes 30 correspondantes sont disposées de sorte à déboucher dans des extrémités 46 qui ne sont pas symétriques l'une de l'autre par rapport au plan de symétrie P.

Par exemple, et comme cela apparaît sur la figure 3, avec un plan de symétrie P qui est orthogonal à l'axe longitudinal X-X des sillons 44, les ouvertures traversantes 30 sont toutes disposées d'un même côté de la plaque 38, c'est-à-dire du côté gauche sur la figure 3.

Selon un autre exemple, illustré par la figure 4, avec un plan de symétrie P localement orthogonal à la face interne 40 et parallèle à l'axe longitudinal X-X des sillons 44, les ouvertures traversantes 30 qui se trouvent d'un côté du plan de symétrie P (en haut sur la figure 4) sont toutes disposées d'un même premier côté de la plaque 38 (à droite sur la figure 4), et les ouvertures traversantes 30 qui se trouvent de l'autre côté du plan de symétrie P (en bas sur la figure 4) sont toutes disposées d'un même deuxième côté de la plaque 38 (à gauche sur la figure 4), opposé au premier côté.

Avantageusement, la face interne 40 comprend un détrompeur 50.

Le détrompeur 50 comprend au moins une cavité 52 associée à un plot 54 correspondant.

La cavité 52 et le plot 54 associé présentent des formes complémentaires.

En outre, sur la face interne 40, la position de la cavité 52 et la position du plot 54 associé sont symétriques par rapport au plan de symétrie P.

Pour former la couche d'entrée 22, la face interne 40 de l'élément inférieur 34 est disposée en regard de la face interne 40 de l'élément supérieur 36, comme illustré par la figure 5.

Puis, la face interne 40 de l'élément inférieur 34 est amenée au contact de la face interne 40 de l'élément supérieur 36, de sorte qu'au moins un sillon 44 de l'élément supérieur 36 soit agencé en regard d'un sillon 44 correspondant de l'élément inférieur 34, pour former le canal 32.

Plus précisément, les bords des sillons 44 agencés en regard l'un de l'autre sont intégralement superposés.

En outre, l'ouverture traversante 30 du sillon 44 de l'élément supérieur 36 et l'ouverture traversante 30 du sillon 44 de l'élément inférieur 34 sont disposées respectivement en des extrémités opposées du canal 32, comme illustré par la figure 6. En d'autres termes, chaque ouverture traversante 30 de l'un parmi l'élément inférieur 34 et l'élément supérieur 36 se trouve en regard d'une partie pleine d'un fond du sillon 44 correspondant de l'autre parmi l'élément inférieur 34 et l'élément supérieur 36.

Ainsi, dans un plan orthogonal aux faces internes 40 respectives des éléments 34, 36 formant la couche d'entrée 22, chaque canal 32 définit une chicane, comme cela apparaît sur les figures 6 et 7.

D'une façon plus générale, les ouvertures traversantes 30 d'un canal 32 donné sont décalées l'une par rapport à l'autre dans une direction distincte d'une direction d'épaisseur de la couche d'entrée 22.

En outre, la longueur du canal 32, c'est-à-dire l'étendue spatiale du canal 32 dans la direction longitudinale des sillons 42 correspondants, est avantageusement supérieure ou égale à l'épaisseur de la couche d'entrée 22.

En outre, la partie de la chicane définie par le canal 32 qui présente la plus grande longueur correspond à la partie délimitée par les sillons 44, c'est-à-dire la partie du canal 32 s'étendant parallèlement aux faces internes 40 respectives des éléments 34, 36, le long de l'axe longitudinal desdits sillons 44.

De préférence, l'élément inférieur 34 et l'élément supérieur 36 sont rendus solidaires l'un de l'autre, par exemple par collage.

De préférence, le canal 32 présente une section comprise entre 0,1 mm$^2$ (millimètre carré) et 10 mm$^2$, par exemple comprise entre 0,2 mm$^2$ et 7 mm$^2$.

De préférence, l'élément inférieur 34 présente une symétrie telle que celle décrite précédemment, et l'élément inférieur 34 et l'élément supérieur 36 sont semblables. Dans ce cas, l'élément supérieur 36 est tel que, en opérant une rotation de 180° de l'élément supérieur 36 autour d'un axe appartenant à la fois à la face interne 40 de l'élément supérieur 36 et au plan de symétrie P, l'élément supérieur 36 se confond parfaitement avec l'élément inférieur 34.

Dans ce cas, chaque paire de sillons 44 symétriques de l'élément inférieur 34 est disposée en regard de la même paire de sillons 44 symétriques de l'élément supérieur 36.

De préférence, au moins un plot 54 de la face interne 40 de la plaque 38 de l'un parmi l'élément inférieur 34 et l'élément supérieur 36 est engagé dans une cavité 52 associée, présentant une forme complémentaire dudit plot 54, formée dans l'autre parmi l'élément inférieur 34 et l'élément supérieur 36.

Dans le cas où l'élément inférieur 34 présente une symétrie telle que celle décrite précédemment, comporte un détrompeur 50 et est semblable à l'élément supérieur 36, , le plot 54 du détrompeur 50 de l'élément supérieur 36 est engagé dans la cavité 52 du détrompeur 50 de l'élément inférieur 34, et le plot 54 de l'élément inférieur 34 est engagé dans la cavité 52 de l'élément supérieur 36.

Avec un tel panneau acoustique 16, la fréquence de travail, noté $f_0$ et exprimée en hertz, est reliée, en première approximation (c'est-à-dire lorsque les effets de l'écoulement rasant ne sont pas pris en compte), à des paramètres du panneau acoustique 16 par la relation suivante :

$$f_0 = \frac{C}{2\pi}\sqrt{\frac{S}{Vl'}}$$

où C est la célérité du son, en mètre par seconde ;
S est une section du canal 32, en mètre carré ;
V est un volume de l'alvéole 24, en mètre cube ; et
et l'est une longueur corrigée du canal 32, en mètre.

La longueur corrigée l' du canal 32 est donnée par la relation suivante :

$$l' = l + 1.7r\left(1 - 0.7\sqrt{\sigma}\right)$$

où l est la longueur du canal 32, égale, dans le cas où le canal 32 est formé par deux sillons 44 parfaitement superposés, à la longueur de l'un des sillons 44, en mètre ;
r est un diamètre d'une ouverture traversante 30 correspondante, en mètre ; et
σ est un taux de perforation de l'élément inférieur 34, seules étant prises en compte les ouvertures traversantes 30 associées à un canal 32 pour lequel il existe une ouverture traversante 30 correspondante dans l'élément supérieur 36. Le taux de perforation σ est égal au résultat de la division de la surface totale des ouvertures traversantes 30 par la surface de la portion de la face externe 42 de l'élément inférieur 34 pourvue des ouvertures traversantes 30.

Chaque canal 32 est formé par une unique ouverture traversante 30 respective des éléments inférieur et supérieur 34, 36, et les sillons 44 correspondants. En outre, chaque canal 32 ne communique avec aucun autre canal 32 de la couche d'entrée 22.

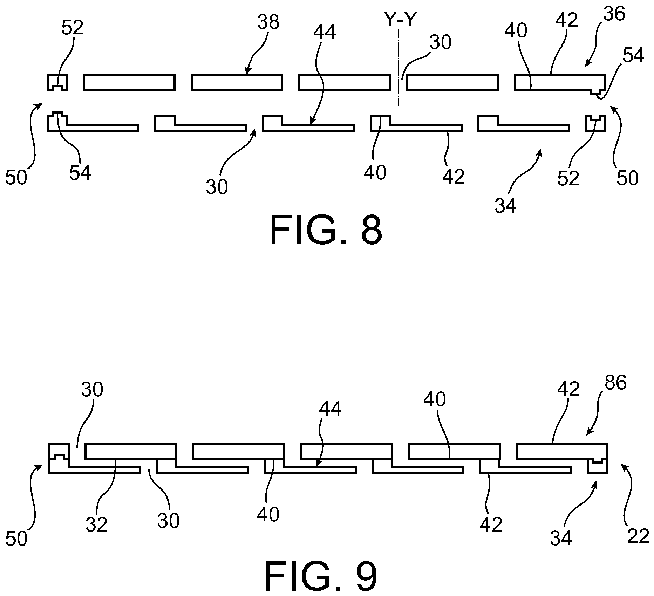

Selon une variante illustrée par les figures 8 et 9, au moins une ouverture traversante 30 de l'un au moins parmi l'élément inférieur 34 et l'élément supérieur 36 ne débouche dans aucun sillon du même élément. Plus précisément, ladite ouverture traversante 30 débouche directement sur la face externe 42 de l'élément considéré, d'une part, et sur la face interne 40 dudit élément, d'autre part. Dans ce cas, lorsque l'élément inférieur 34 et l'élément supérieur 36 sont assemblés, ladite ouverture traversante 30 débouchant directement à la fois sur la face externe 42 et sur la face interne 40 est agencée en regard d'un sillon 44 correspondant de l'autre élément parmi l'élément inférieur 34 et l'élément supérieur 36, avantageusement à distance de l'ouverture traversante 30 formée dans cet autre élément et débouchant dans ce dernier sillon 44.

Par exemple, dans le cas d'une ouverture traversante 30 débouchant directement à la fois sur la face externe 42 et sur la face interne 40 de l'élément inférieur 34, le canal 32 est formé par ladite ouverture traversante 30 de l'élément inférieur 34, le sillon 44 correspondant de l'élément supérieur 36, l'ouverture traversante 30 formée dans l'élément supérieur 36 et débouchant dans ledit sillon 44, et la partie de la face interne 40 de l'élément inférieur 34 qui est située en regard du sillon 44.

Par exemple, dans le cas d'une ouverture traversante 30 débouchant directement sur la face externe 42 et la face interne 40 de l'élément supérieur 36, le canal 32 est formé par ladite ouverture traversante 30 de l'élément supérieur 36, le sillon 44 correspondant de l'élément inférieur 34, l'ouverture traversante 30 formée dans l'élément inférieur 34 et débouchant dans ledit sillon 44, et la partie de la face interne 40 de l'élément supérieur 36 qui est située en regard du sillon 44.

Un panneau acoustique 16 selon l'invention autorise la mise en œuvre d'une atténuation acoustique pour des fréquences basses associées aux nouvelles générations de turbomachines, sans un accroissement significatif de la masse ou de l'encombrement du panneau acoustique 16. Cet effet est obtenu par la mise en œuvre d'une couche d'entrée 22 dans laquelle les canaux 32, assimilables aux cols des résonateurs de Helmholtz usuels, s'étendent dans une direction longitudinale par rapport au panneau acoustique 16. Grâce à une telle géométrie, l'allongement du canal 32, dicté par la nécessité d'atténuer une fréquence plus basse, n'entraîne pas une augmentation significative de l'épaisseur du panneau acoustique 16.

La symétrie des éléments inférieur et supérieur 34, 36 entraîne une réduction des coûts de fabrication, les éléments inférieur et supérieur 34, 36 étant identiques et obtenus par un même procédé. Une telle symétrie assure, en effet, un recouvrement des sillons de l'élément inférieur 34 avec les sillons de l'élément supérieur 36 pour former les canaux 32 de la couche d'entrée 22.

La présence du détrompeur 50 autorise un positionnement précis de l'élément inférieur 34 par rapport à l'élément supérieur 36, et facilite les opérations de montage.

## Revendications

1. Panneau acoustique (16) pour ensemble propulsif (2) d'aéronef, destiné à être agencé en bordure d'une veine d'écoulement de fluide de l'ensemble propulsif (2),

   le panneau acoustique (16) comportant :

   - un cœur (18) ayant une première face (26) et une deuxième face (28) opposées, et comprenant une pluralité d'alvéoles (24) agencées pour former une structure en nid d'abeille, chaque alvéole (24) débouchant sur la première face (26) et la deuxième face (28) ; et
   - une couche d'entrée (22) s'étendant en regard et au contact de la première face (26) du cœur (18), la couche d'entrée (22) comprenant un élément inférieur (34) et un élément supérieur (36), chacun des éléments inférieur (34) et supérieur (36) comprenant une plaque (38) ayant une face interne (40) et une face externe (42) opposées ;

   le panneau acoustique étant **caractérisé en ce que** la face interne (40) de chaque plaque (38) est disposée en regard et au contact de la face interne (40) de l'autre plaque (38),
   chaque plaque (38) comprend au moins une ouverture traversante (30) débouchant sur la face externe (42) et la face interne (40) de ladite plaque (38),
   la face interne (40) d'au moins une des plaques (38) comprend, pour au moins une ouverture traversante (30), un sillon (44) correspondant dans lequel débouche l'ouverture traversante (30),
   chaque sillon (44) d'une plaque (38) est en regard d'une ouverture traversante (30) de l'autre plaque (38), de manière à former un canal (32) comprenant le sillon (44), l'ouverture traversante (30) qui débouche dans le sillon (44) et l'ouverture traversante (30) en regard du sillon (44),
   pour chaque canal (32), les ouvertures traversantes (30) sont décalées dans une direction distincte d'une direction d'épaisseur de la couche d'entrée (22), l'ouverture traversante (30) de la plaque (38) de l'élément inférieur (34) débouchant dans une alvéole (24) du cœur (18), et l'ouverture traversante (30) de la plaque (38) de l'élément supérieur (36) étant destinée à déboucher dans la veine d'écoulement de fluide.

2. Panneau acoustique (16) selon la revendication 1, dans lequel la face interne (40) de chaque plaque (38) comprend, pour chaque ouverture traversante (30), un sillon (44) correspondant dans lequel débouche l'ouverture traversante (30),
   chaque canal (32) étant formé par deux sillons (44) respectifs de la plaque (38) de l'élément inférieur (34) et de la plaque (38) de l'élément supérieur (36) situés en regard l'un de l'autre, et par les ouvertures traversantes (30) correspondantes de la plaque (38) de l'élément inférieur (34) et de la plaque (38) de l'élément supérieur (36).

3. Panneau acoustique (16) selon la revendication 1 ou 2, dans lequel, pour chaque sillon (44), l'ouverture traversante (30) correspondante débouche, sur la face interne (40), dans une extrémité du sillon (44).

4. Panneau acoustique (16) selon la revendication 3 lorsqu'elle dépend de la revendication 2, dans lequel, pour chaque canal (32), les sillons (44) correspondants sont intégralement en regard l'un de l'autre.

5. Panneau acoustique (16) selon l'une quelconque des revendications 1 à 4, comportant, en outre, une couche réfléchissante configurée pour réfléchir des ondes acoustiques présentant une fréquence appartenant à une plage prédéterminée,
   la couche réfléchissante s'étendant en regard et au contact de la deuxième face (28) du cœur (18).

6. Panneau acoustique (16) selon l'une quelconque des revendications 1 à 5, dans lequel, pour chaque plaque (38), la face interne (40) correspondante comporte une pluralité de sillons (44), les sillons (44) étant symétriques par rapport à un plan de symétrie, et, pour au moins une paire de sillons (44) symétriques entre eux par rapport au plan de symétrie, les ouvertures traversantes (30) correspondantes sont disposées de sorte à déboucher dans des extrémités desdits sillons (44) qui ne sont pas symétriques l'une de l'autre par rapport au plan de symétrie.

7. Panneau acoustique (16) selon l'une quelconque des revendications 1 à 6, dans lequel la face interne (40) d'une plaque (38) comporte au moins un plot engagé dans une cavité associée de l'autre plaque (38), la cavité et le plot associé présentant des formes complémentaires.

8. Panneau acoustique (16) selon l'une quelconque des revendications 1 à 7, dans lequel, pour chaque plaque (38), chaque sillon (44) est rectiligne et s'étend le long d'un axe longitudinal parallèle à un plan localement tangent à la face interne (40) correspondante,
et, pour chaque sillon (44), l'ouverture traversante (30) correspondante présente un axe orthogonal au plan localement tangent à la face interne (40).

9. Panneau acoustique (16) selon la revendication 8, dans lequel le sillon (44) présente une profondeur inférieure ou égale à la moitié d'une longueur du sillon (44), de préférence inférieure ou égale au tiers de la longueur du sillon (44), la longueur du sillon (44) étant définie par l'étendue du sillon (44) le long de l'axe longitudinal.

10. Ensemble propulsif (2) pour aéronef comportant au moins un panneau acoustique (16) selon l'une quelconque des revendications 1 à 9.

**Patentansprüche**

1. Akustikplatte (16) für eine Antriebseinheit (2) eines Flugzeugs, die im Randbereich einer Fluidströmungsader der Antriebseinheit (2) angeordnet ist,

wobei die Akustikplatte (16) Folgendes aufweist:

- ein Mittelstück (18), das eine erste Fläche (26) und eine zweite Fläche (28) hat, die sich gegenüberliegen, und eine Vielzahl von Waben (24) aufweist, die zur Bildung einer Wabenkörperstruktur angeordnet sind, wobei jede Wabe (24) in die erste Fläche (26) und die zweite Fläche (28) mündet; sowie
- eine Eintrittsschicht (22), die sich gegenüber und in Kontakt mit der ersten Fläche (26) des Mittelstücks (18) erstreckt, wobei die Eintrittsschicht (22) ein unteres Element (34) und ein oberes Element (36) aufweist, wobei das untere (34) und obere Element (36) jeweils eine Grundplatte (38) mit einer Innenfläche (40) und einer Außenfläche (42) aufweisen, die sich gegenüberliegen;

wobei die Akustikplatte **dadurch gekennzeichnet ist, dass** die Innenfläche (40) jeder Grundplatte (38) gegenüber und in Kontakt mit der Innenfläche (40) der anderen Grundplatte (38) vorliegt,
jede Grundplatte (38) mindestens eine Durchgangsöffnung (30) aufweist, die in die Außenfläche (42) und die Innenfläche (40) der Grundplatte (38) mündet,
die Innenfläche (40) von mindestens einer der Grundplatten (38) für mindestens eine Durchgangsöffnung (30) eine entsprechende Nut (44) aufweist, in welche die Durchgangsöffnung (30) mündet,
jede Nut (44) einer Grundplatte (38) einer Durchgangsöffnung (30) der anderen Grundplatte (38) derart gegenüber liegt, dass sie einen Kanal (32) bildet, der die Nut (44), die Durchgangsöffnung (30), die in die Nut (44) mündet, sowie die Durchgangsöffnung (30) gegenüber der Nut (44) aufweist,
die Durchgangsöffnungen (30) bei jedem Kanal (32) in einer Richtung versetzt sind, die sich von einer Dickenrichtung der Eingangsschicht (22) unterscheidet, wobei die Durchgangsöffnung (30) der Grundplatte (38) des unteren Elements (34) in eine Wabe (24) des Mittelstücks (18) mündet, und wobei die Durchgangsöffnung (30) der Grundplatte (38) des oberen Elements (36) dazu vorgesehen ist, in die Fluidströmungsader zu münden.

2. Akustikplatte (16) nach Anspruch 1, wobei die Innenfläche (40) jeder Grundplatte (38) für jede Durchgangsöffnung (30) eine entsprechende Nut (44) aufweist, in die die Durchgangsöffnung (30) mündet, wobei jeder Kanal (32) durch jeweils zwei Nuten (44) der Grundplatte (38) des unteren Elements (34) und der Grundplatte (38) des oberen Elements (36), welche einander gegenüberliegen, sowie durch die entsprechenden Durchgangsöffnungen (30) der Grundplatte (38) des unteren Elements (34) und der Grundplatte (38) des oberen Elements (36) gebildet ist.

3. Akustikplatte (16) nach Anspruch 1 oder 2, wobei bei jeder Nut (44) die entsprechende Durchgangsöffnung (30) auf der Innenfläche (40) in ein Ende der Nut (44) mündet.

4. Akustikplatte (16) nach Anspruch 3, wenn dieser von Anspruch 2 abhängt, wobei die entsprechenden Nuten (44) für jeden Kanal (32) einander vollständig gegenüberliegen.

5. Akustikplatte (16) nach einem der Ansprüche 1 bis 4, außerdem mit einer reflektierenden Schicht, die zum Reflektieren von Schallwellen ausgeführt ist, welche eine zu einem vorbestimmten Bereich gehörende Frequenz aufweisen,
wobei die reflektierende Schicht gegenüber und in Kontakt mit der zweiten Fläche (28) des Mittelstücks (18) verläuft.

**6.** Akustikplatte (16) nach einem der Ansprüche 1 bis 5, wobei die entsprechende Innenfläche (40) für jede Grundplatte (38) eine Vielzahl von Nuten (44) aufweist, wobei die Nuten (44) bezüglich einer Symmetrieebene symmetrisch sind, und bei mindestens einem Paar von Nuten (44), die untereinander bezüglich der Symmetrieebene symmetrisch sind, die entsprechenden Durchgangsöffnungen (30) derart vorliegen, dass sie in die Enden der Nuten (44) münden, welche bezüglich der Symmetrieebene nicht zueinander symmetrisch sind.

**7.** Akustikplatte (16) nach einem der Ansprüche 1 bis 6, wobei die Innenfläche (40) einer Grundplatte (38) mindestens einen Stift aufweist, der in einen der anderen Grundplatte (38) zugeordneten Hohlraum eingreift, wobei der Hohlraum und der zugeordnete Stift komplementäre Formen aufweisen.

**8.** Akustikplatte (16) nach einem der Ansprüche 1 bis 7, wobei bei jeder Grundplatte (38) jede Nut (44) geradlinig ist und sich entlang einer Längsachse parallel zu einer Ebene erstreckt, die die entsprechende Innenfläche (40) lokal tangiert, und bei jeder Nut (44) die entsprechende Durchgangsöffnung (30) eine Achse aufweist, die orthogonal zu der Ebene verläuft, welche die Innenfläche (40) lokal tangiert.

**9.** Akustikplatte (16) nach Anspruch 8, wobei die Nut (44) eine Tiefe aufweist, die geringer als oder gleich der Hälfte einer Länge der Nut (44) ist, vorzugsweise geringer als oder gleich dem Drittel der Länge der Nut (44), wobei die Länge der Nut (44) durch die Erstreckung der Nut (44) entlang der Längsachse definiert ist.

**10.** Antriebseinheit (2) für ein Flugzeug mit mindestens einer Akustikplatte (16) nach einem der Ansprüche 1 bis 9.

**Claims**

**1.** Acoustic panel (16) for an aircraft propulsion unit (2), intended to be arranged at the edge of a fluid flow stream of the propulsion unit (2),

the acoustic panel (16) comprising:

- a core (18) having an opposing first face (26) and second face (28), and comprising a plurality of cells (24) designed to form a honeycomb structure, each cell (24) opening onto the first face (26) and the second face (28); and
- an entry layer (22) extending opposite and in contact with the first face (26) of the core (18), the entry layer (22) comprising a lower element (34) and an upper element (36), each of the lower (34) and upper (36) elements comprising a plate (38) having an opposing inner face (40) and outer face (42).

the acoustic panel being **characterised in that** the inner face (40) of each plate (38) is disposed opposite and in contact with the inner face (40) of the other plate (38), each plate (38) comprises at least one through-hole (30) opening onto the outer face (42) and the inner face (40) of said plate (38), the inner face (40) of at least one of the plates (38) comprises, for at least one through-hole (30), a corresponding groove (44) into which the through-hole (30) opens, each groove (44) of a plate (38) is opposite a through-hole (30) of the other plate (38), in such a way as to form a channel (32) comprising the groove (44), the through-hole (30) which opens into the groove (44) and the through-hole (30) opposite the groove (44), for each channel (32), the through-holes (30) is offset in a direction different from a direction of thickness of the entry layer (22), the through-hole (30) of the plate (38) of the lower element (34) opening into a cell (24) of the core (18), and the through-hole (30) of the plate (38) of the upper element (36) being intended to open into the fluid flow stream.

**2.** Acoustic panel (16) according to claim 1, wherein the inner face (40) of each plate (38) comprises, for each through-hole (30), a corresponding groove (44) into which the through-hole opens (30), each channel (32) being formed by two respective grooves (44) of the plate (38) of the lower element (34) and of the plate (38) of the upper element (36) situated opposite each other, and by the corresponding through-holes (30) of the plate (38) of the lower element (34) and of the plate (38) of the upper element (36).

**3.** Acoustic panel (16) according to claim 1 or 2, wherein, for each groove (44), the corresponding through-hole (30) opens, on the inner face (40), into one end of the groove (44).

**4.** Acoustic panel (16) according to claim 3, when it depends on claim 2, wherein, for each channel (32), the corresponding grooves (44) are entirely opposite each other.

**5.** Acoustic panel (16) according to any one of claims 1 to 4, comprising, in addition, a reflective layer configured to reflect acoustic waves having a frequency belonging to a predetermined range,

the reflective layer extending opposite and in contact with the second face (28) of the core (18).

6. Acoustic panel (16) according to any one of claims 1 to 5, wherein, for each plate (38), the corresponding inner face (40) comprises a plurality of grooves (44), the grooves (44) being symmetrical with respect to a plane of symmetry,
and, for at least one pair of grooves (44) that are mutually symmetrical with respect to the plane of symmetry, the corresponding through-holes (30) are disposed so as to open into ends of said grooves (44) which are not mutually symmetrical with respect to the plane of symmetry.

7. Acoustic panel (16) according to any one of claims 1 to 6, wherein the inner face (40) of one plate (38) comprises at least one stud engaged in an associated cavity of the other plate (38), the cavity and the associated stud having complementary shapes.

8. Acoustic panel (16) according to any one of claims 1 to 7, wherein, for each plate (38), each groove (44) is rectilinear and extends along a longitudinal axis parallel to a plane that is locally tangent to the corresponding inner face (40),
and, for each groove (44), the corresponding through-hole (30) has an axis orthogonal to the plane that is locally tangent to the inner face (40).

9. Acoustic panel (16) according to claim 8, wherein the groove (44) has a depth less than or equal to half the length of the groove (44), preferably less than or equal to a third of the length of the groove (44), the length of the groove (44) being defined by the extent of the groove (44) along the longitudinal axis.

10. Propulsion unit (2) for an aircraft, comprising at least one acoustic panel (16) according to any one of claims 1 to 9.

FIG. 1

FIG. 2

# FIG. 3

# FIG. 4

FIG. 5

FIG. 6

FIG. 7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010206664 A